(19) Europäisches Patentamt
European Patent Office
Office européen des brevets

(11) **EP 3 937 094 A1**

(12) **EUROPEAN PATENT APPLICATION**
published in accordance with Art. 153(4) EPC

(43) Date of publication:
**12.01.2022 Bulletin 2022/02**

(51) Int Cl.:
**G06N 20/00** (2019.01)

(21) Application number: **19918433.4**

(22) Date of filing: **24.12.2019**

(86) International application number:
**PCT/JP2019/050480**

(87) International publication number:
**WO 2020/179200 (10.09.2020 Gazette 2020/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.03.2019 US 201962813348 P
17.09.2019 JP 2019168679**

(71) Applicant: **Panasonic Intellectual Property
Corporation
of America
Torrance, CA 90503 (US)**

(72) Inventors:
• **ISHII, Yasunori**
**Osaka-shi, Osaka 540-6207 (JP)**
• **FUJIMURA, Ryota**
**Osaka-shi, Osaka 540-6207 (JP)**
• **TSUKIZAWA, Sotaro**
**Osaka-shi, Osaka 540-6207 (JP)**

(74) Representative: **Vigand, Philippe et al
Novagraaf International SA
Chemin de l'Echo 3
1213 Onex - Genève (CH)**

(54) **INFORMATION PROCESSING METHOD AND INFORMATION PROCESSING SYSTEM**

(57)    In the information processing method executed by the computer, first data is input into a discriminator to obtain first discrimination result data; second data is input into the discriminator to obtain second discrimination result data; a first difference between reference data in a discrimination process for the first data by the discriminator and the first discrimination result data is calculated; a first squared error data and a first weight, which is a weight of the first squared error data, are calculated based on the first difference; a second difference between reference data in a discrimination process for the second data by the discriminator and the second discrimination result data is calculated; a second squared error data and a second weight, which is a weight of the second squared error data, are calculated based on the second difference; and the discriminator is trained based on the first squared error data, the second squared error data, the first weight, and the second weight. The first discrimination result data and the second discrimination result data are data of a tensor having a rank of one or higher.

FIG. 4

**Description**

[Technical Field]

This disclosure relates to an information processing method executed by a computer and an information processing system that executes the information processing method.

[Background Art]

In order to stabilize the training of a discriminator in generative adversarial networks (GAN), a method using weight normalization has been proposed (Patent Literature (PTL) 1).

[Citation List]

[Patent Literature]

[PTL 1] International Publication No. 2019/004350

[Non Patent Literature]

[NPL 1] Jun-Yan Zhu, Taesung Park, Phillip Isola, and Alexei A. Efros. "Unpaired Image-to-Image Translation using Cycle-Consistent Adversarial Networks", in IEEE International Conference on Computer Vision (ICCV), 2017

[Summary of Invention]

[Technical Problem]

With the above method, it may be difficult to stabilize the training (learning) of the discriminator depending on the data used for training.
The present disclosure provides an information processing method or the like capable of more stably converging training of the discriminator in such a case.

[Solution to Problem]

The information processing method according to one aspect of the present disclosure is an information processing method executed by a computer, the information processing method including: obtaining first data and second data that is simulated data based on the first data; inputting the first data into a discriminator to obtain first discrimination result data; calculating a first difference between reference data in a discrimination process for the first data by the discriminator and the first discrimination result data; calculating a first squared error data and a first weight based on the first difference, the first weight being a weight of the first squared error data; inputting the second data into the discriminator to obtain second discrimination result data; calculating a second difference between reference data in a discrimination process for the second data by the discriminator and the second discrimination result data; calculating a second squared error data and a second weight based on the second difference, the second weight being a weight of the second squared error data; and training the discriminator based on the first squared error data, the second squared error data, the first weight, and the second weight; wherein the first discrimination result data and the second discrimination result data are data of a tensor having a rank of one or higher.
In addition, the information processing system according to one aspect of the present disclosure, includes: an obtainer that obtains first data and second data that is simulated data based on the first data; a weight calculator that calculates a first difference between first discrimination result data obtained by inputting the first data into a discriminator and reference data in a discrimination process for the first data, calculates a second difference between second discrimination result data obtained by inputting the second data into the discriminator and reference data in a discrimination process for the second data, calculates a first squared error data and a first weight, which is a weight of the first squared error data, based on the first difference, and calculates a second squared error data and a second weight, which is a weight of the second squared error data, based on the second difference; an error calculator that calculates error data used for training the discriminator based on the first squared error data, the second squared error data, the first weight, and the second weight; and a trainer that trains the discriminator using the error data, wherein the first discrimination result data and the second discrimination result data are data of a tensor having a rank of one or higher.
It should be noted that in addition to the above method and system, these comprehensive or specific aspects may be realized by a device, an integrated circuit, or a recording medium such as a computer-readable CD-ROM, and may be realized by any combination of a device, a system, an integrated circuit, a method, a computer program, and a recording medium.

[Advantageous Effects of Invention]

By the information processing method and the like according to the present disclosure, the training of the discriminator can be converged more stably even if the data by which it is conventionally difficult to converge the training is used.

[Brief Description of Drawings]

[FIG. 1]

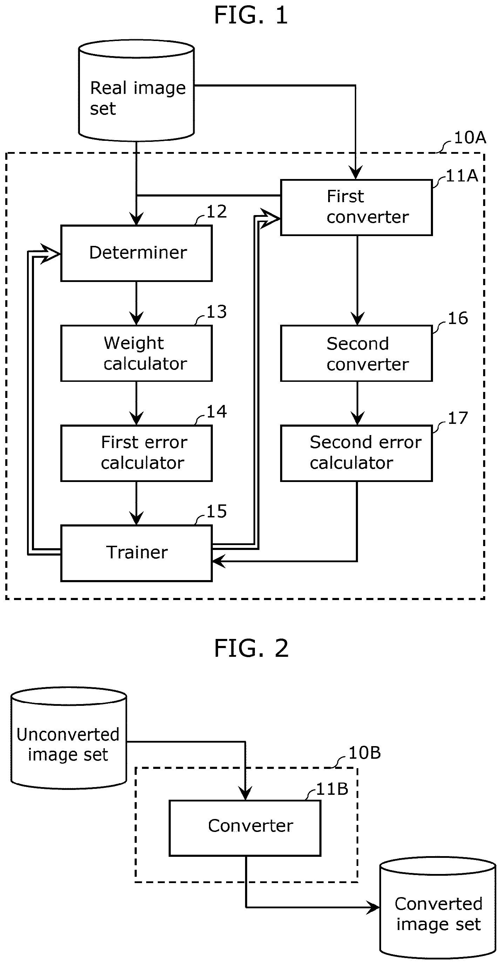

FIG. 1 is a functional block diagram in the learning phase of the information processing system according to an embodiment.
[FIG. 2]
FIG. 2 is a functional block diagram in the inference phase of the information processing system according to the embodiment.
[FIG. 3]

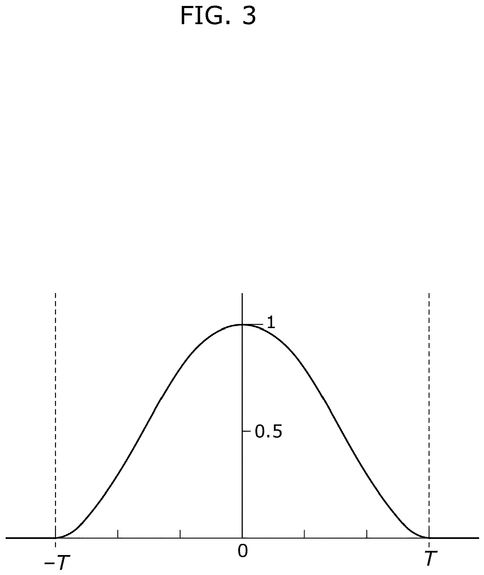

FIG. 3 schematically shows a graph of a function indicating a weight set in the above learning phase.
[FIG. 4]

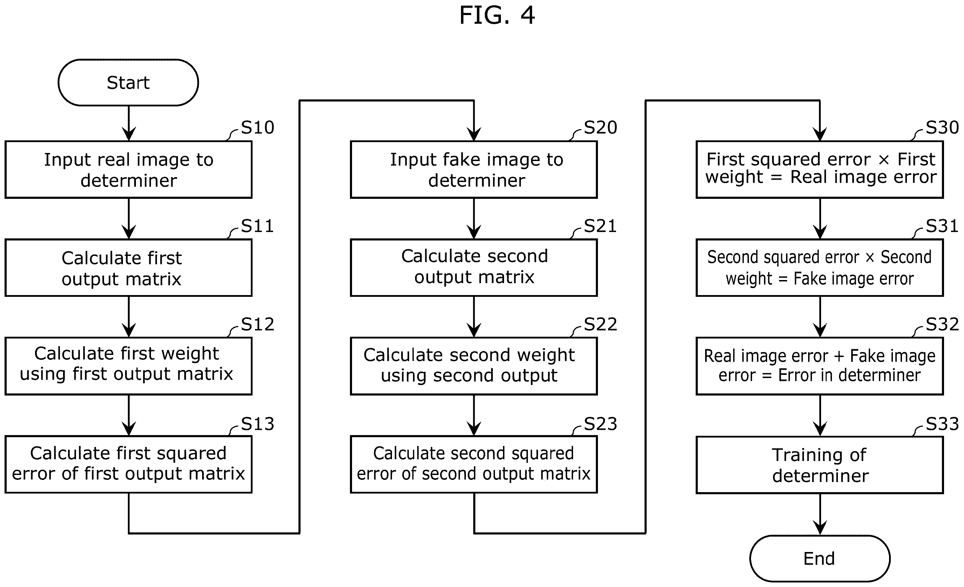

FIG. 4 is a flow diagram showing a procedure example of the operations of the information processing method executed for training the discriminator in the above information processing system.

[Description of Embodiments]

(Underlying knowledge forming basis of the present disclosure)

The inventors have found that the following problems arise with respect to the above-mentioned proposed conventional method.
In this conventional method, in order to prevent the weight of the discriminator from becoming excessive, the output value of the discriminator is prevented from becoming an outlier by normalizing the weight. More specifically, a singular value of the weight matrix having the weight of each layer of the discriminator as an element is calculated, and the weight matrix is normalized by using the norm of this singular value. Then, the weight matrix after normalization is updated based on the output error of the discriminator.
However, there are cases where it is difficult for the learning of the discriminator to converge with this conventional method.
There are GAN called CycleGAN, which are used, for example, for the purpose of conversion between different types of image sets. CycleGAN are GAN of a PatchGAN system and a least squares GAN (LSGAN) system. The output from the discriminator of a PatchGAN system is a matrix whose elements are not scalar values that take values of 0 or 1, but values indicating the determination results of whether each of the plurality of small areas (patches) obtained by dividing the entire input image is a simulated image output by the generator or an image not output from the generator. Then, the discriminator of the LSGAN system is trained based on the squared error of this matrix output by the discriminator and the matrix showing the correct answer in this discrimination (matrix in which 0s or 1s are lined up). Such CycleGAN show preferred conversion results even in a generator trained with a data set of unaligned images (see NPL 1). For that reason, for example, high practicality is expected in applications where it is practically difficult to obtain an aligned data set in an amount required for training.
However, there is a high possibility that the image data that can be obtained as an unaligned data set contains a larger amount of noise than the aligned data set. The noise referred to here is due to, for example, fluctuations in the image quality, the degree of focusing, or the color of the image. In addition, when the data set is a person image, the posture of the person in the image, the range of the body appearing in the image that changes depending on the occlusion or composition, or changes in objects other than the person such as the person's belongings or background, can also be included as an example of the cause of noise. Such noise affects the training of the discriminator of a PatchGAN system and a LSGAN system described above. Specifically, it destabilizes the training of the discriminator and thus makes it difficult to obtain generators that produce images in the desired quality. Then, there is a problem that the above-mentioned conventional method cannot cope with the stabilization of the training of the discriminator caused by such noise.

The information processing method according to one aspect of the present disclosure devised in view of such a problem is an information processing method executed by a computer, the information processing method including: obtaining first data and second data that is simulated data based on the first data; inputting the first data into a discriminator to obtain first discrimination result data; calculating a first difference between reference data in a discrimination process for the first data by the discriminator and the first discrimination result data; calculating a first squared error data and a first weight based on the first difference, the first weight being a weight of the first squared error data; inputting the second data into the discriminator to obtain second discrimination result data; calculating a second difference between reference data in a discrimination process for the second data by the discriminator and the second discrimination result data; calculating a second squared error data and a second weight based on the second difference, the second weight being a weight of the second squared error data; and training the discriminator based on the first squared error data, the second squared error data, the first weight, and the second weight; wherein the first discrimination result data and the second discrimination result data are data of a tensor having a rank of one or higher.

With this, when the noise contained in the training data of the discriminator is larger than a certain level, the influence on the training result can be suppressed to converge the training more stably.

In addition, as an absolute value of the first difference is larger, the first weight may be made smaller to reduce an influence rate of the first squared error data on the training of the discriminator, and as an absolute value of the second difference is larger, the second weight may be made smaller to reduce an influence rate of the second squared error data on the training of the discriminator.

In addition, when the absolute value of the first difference exceeds a threshold value, the first weight may be set to zero, and when the absolute value of the second difference exceeds a threshold value, the second weight may be set to zero.

In addition, the second data may be generated from the first data and output by a generator, and the generator may be trained based on the first squared error data, the second squared error data, the first weight, and the second weight.

With this, the training of the above-mentioned discriminator and the generator that is adversarial in the GAN converges more stably.

In addition, the first data may be image data.

In addition, the information processing system according to one aspect of the present disclosure, includes: an obtainer that obtains first data and second data that is simulated data based on the first data; a weight calculator that calculates a first difference between first discrimination result data obtained by inputting the first data into a discriminator and reference data in a discrimination process for the first data, calculates a second difference between second discrimination result data obtained by inputting the second data into the discriminator and reference data in a discrimination process for the second data, calculates a first squared error data and a first weight, which is a weight of the first squared error data, based on the first difference, and calculates a second squared error data and a second weight, which is a weight of the second squared error data, based on the second difference; an error calculator that calculates error data used for training the discriminator based on the first squared error data, the second squared error data, the first weight, and the second weight; and a trainer that trains the discriminator using the error data, wherein the first discrimination result data and the second discrimination result data are data of a tensor having a rank of one or higher.

With this, when the noise contained in the training data of the discriminator is larger than a certain level, the influence on the training result is suppressed to converge the training more stably.

It should be noted that in addition to the above method and system, these comprehensive or specific aspects may be realized by a device, an integrated circuit, or a recording medium such as a computer-readable CD-ROM, and may be realized by any combination of a device, a system, an integrated circuit, a method, a computer program, and a recording medium.

Hereinafter, an embodiment of the information processing method and the information processing system according to one aspect of the present disclosure will be described with reference to the drawings. The embodiment shown here show a specific example of the present disclosure. Therefore, the numerical values, shapes, components, arrangement and connection forms of the components, steps (processes), order of steps, and the like shown in the following embodiment are examples, and do not limit the present disclosure. In addition, among the components in the following embodiment, the components not described in the independent claims are components that can be arbitrarily added. In addition, each figure is a schematic diagram and is not necessarily a precise illustration.

[Embodiment]

[1. Configuration]

FIG. 1 and FIG. 2 are functional block diagrams showing a functional configuration example of the information processing system according to the embodiment. These information processing systems are configured by using one or more information processing devices (computers) each having a processor and a memory to execute a program, and implements CycleGAN. The functional configuration for the learning phase of this information processing system is shown in FIG. 1, and the functional configuration for the inference phase thereof is shown in FIG. 2, separately. The components of these functional configurations indicated by the respective blocks are realized, for example, by a part or all of the above-described processor executing one or more programs stored in a part or all of the memory.

[1-1. Configuration for training phase]

As shown in FIG. 1, information processing system 10A according to the embodiment includes first converter 11A, determiner 12, weight calculator 13, first error calculator 14, trainer 15, second converter 16, and second error calculator 17.

First converter 11A performs a predetermined conversion on the real image obtained by information processing system 10A to generate and output a fake image. The predetermined conversion is, for example, changing the image quality or the style of the image. Changing the style of the image means, for example, making an input real image look as if it is a painting of a predetermined painter or style, or vice versa, making an input oil painting image or an image by computer graphics (CG) look as if it is a real image. In addition, another example of a predetermined conversion is changing the colors contained in the image according to a predetermined policy, for example, making an input natural landscape photographic image look like an image taken in the same composition in different seasons. Another example similar to this includes making a specific subject included in an input image look like another subject mainly by changing the color or pattern. More specifically, it is a conversion that makes a brown horse in the image look like a zebra or an apple look like an orange. It can also be said that another expression for the conversions like these by first converter 11A is generating and outputting a simulated image (fake image) in which different styles, different seasonal landscapes, different subject appearances, and the like are simulated, while retaining the basic composition of the input image (real image). Such first converter 11A is one of two generators included in the CycleGAN implemented by information processing system 10A, and is a generation model of a neural network used for the conversion applications as described above. In addition, the real image data is an example of the first data in the present embodiment, and the fake image data is an example of the second data in the present embodiment.

Determiner 12 performs a discrimination process for determining whether the input image is a real image or a fake image generated by first converter 11A, and outputs the result. This discrimination process is performed by the PatchGAN system described above, and the result of the discrimination process is output in the form of a matrix whose elements are values indicating the likelihood of whether the image is a real image or a fake image for each small area. For example, it is a matrix that takes values of 1 for the element corresponding to the small area determined to be a real image, 0 for the element corresponding to the small area determined to be a fake image, and greater than 0 and less than 1 according to the determination result as to whether each small area is a fake image or a real image for the element corresponding to a small area other than these. Such determiner 12 is a discriminator in the CycleGAN implemented by information processing system 10A, and is a discrimination model of a neural network used for the discrimination purposes as described above. In the following, among the data (hereinafter, also referred to as discrimination result data) indicating the result of this discrimination process output by determiner 12, the discrimination result data output by receiving the input of the real image is also referred to as the first discrimination result data, and the discrimination result data output by receiving the input of the fake image is also referred to as the second discrimination result data.

Weight calculator 13 calculates a difference between the discrimination result data output by determiner 12 after executing the discrimination process and the data (hereinafter, also referred to as reference data) indicating the correct answer in the discrimination process of this discrimination process. In addition, weight calculator 13 calculates the weight and the squared error of each element of the matrix which is the discrimination result data output by determiner 12 based on this difference. The reference data is a matrix having the same size as the discrimination result data and having 1 for all elements or 0 for all elements. According to the example used in the above description of determiner 12, it is a matrix having 1 for all elements that indicates the correct answer of the matrix output by determiner 12 when the real image is input. In addition, it is a matrix having 0 for all elements that indicates the correct answer of the matrix output by determiner 12 when the fake image is input. It should be noted that hereinafter, the weight and the squared error calculated by weight calculator 13 with respect to the discrimination result output by determiner 12 into which the real image is input are also referred to as the first weight and the first squared error, respectively. In addition, hereinafter, the weight and the squared error calculated by weight calculator 13 with respect to the discrimination result output by determiner 12 into which the fake image is input are also referred to as the second weight and the second squared error, respectively.

First error calculator 14 calculates the error of determiner 12 based on the first weight, the first squared error, the second weight, and the second squared error.

It should be noted that the above-mentioned weight calculation by weight calculator 13 and the error calculation of determiner 12 using this weight by first error calculator 14 will be described later using an example.

Trainer 15 trains determiner 12 using the error calculated by first error calculator 14.

Second converter 16 is the other generator that is the generation model of the neural network in the CycleGAN implemented by information processing system 10A. Second converter 16 receives the input of the fake image generated and output by first converter 11A. Then, such a conversion as to restore the real image before being converted into the fake image is implemented to output the image generated by the conversion.

Second error calculator 17 calculates the error based on the difference between the image output by second converter 16 and the image of the correct answer corresponding to this image, that is, the real image before being converted into the fake image output by first converter 11A. This error is input to trainer 15 and used for the training of first converter 11A.

In information processing system 10A, each of these components is realized by one or more information processing devices configuring information processing system 10A.

It should be noted that the real image set is a set of images that have not undergone any conversion processing for simulation as described above by first converter 11A, and includes a plurality of still images or a moving image including a plurality of frames. Information processing system 10A may read out and obtain the data of the real image set, for example, the data recorded on a non-temporary recording medium such as a digital versatile disc (DVD) or a semiconductor memory, by using a reading device, or may obtain the data by receiving the input of the image signal from the camera. Alternatively, information processing system 10A may further include a communication device and obtain the data of the real image set via the signal received by this communication device.

[1-2. Configuration for inference phase]

As shown in FIG. 2, information processing system 10B according to the embodiment includes converter 11B which is a generation model obtained by machine learning. Specifically, converter 11B is first converter 11A in which the above-mentioned training for a predetermined conversion is repeatedly performed in information processing system 10A, and for example, when the evaluation regarding such conversion performance reaches a desired standard, it can be treated as converter 11B. Converter 11B executes a predetermined conversion on the unconverted image and outputs the converted image. For example, when converter 11B receives an input of a real image as an unconverted image, converter 11B converts the real image to generate and output a converted image that looks as if it is a painting in a predetermined style.

In information processing system 10B, converter 11B is realized by one or more information processing devices configuring information processing system 10B. The information processing devices configuring information processing system 10B may be common to those configuring information processing system 10A, and converter 11B may be first converter 11A itself whose training has converged to some extent or more. In addition, the information processing devices configuring information processing system 10B may be different from those configuring information processing system 10A. For example, first converter 11A may be on a plurality of stationary computers configuring information processing system 10A, and converter 11B may be on a microcontroller provided in a mobile body such as an automobile, a personal digital assistant, a household electric appliance, or the like. Converter 11B in this case may be obtained by reducing the weight of (quantizing) first converter 11A.

[2. Suppression of the influence of outliers]

In the training phase of the conventional GAN, the squared error calculated based on the difference between the output of the discriminator and the reference data indicating the correct answer is used for training the discriminator. On the other hand, in the training phase by information processing system 10A according to the present embodiment, a process for suppressing the influence of outliers included in the data to be discriminated in the training of determiner 12 which is the discriminator is further performed. A specific example of this process will be described below. In this example, Tukey's biweight estimation method, which is one of the robust estimation methods, is used to set the weight.

In information processing system 10A, the difference between the discrimination result data output by determiner 12 after executing the discrimination process and the reference data in this discrimination process is calculated by weight calculator 13 as described above. Furthermore, weight calculator 13 calculates the weight (first weight, second weight) and squared error (first squared error, second squared error) of each element of the matrix output by determiner 12 based on this difference as follows.

When each element of the first discrimination result data output by determiner 12 is $D_1(x)$ and each element of the reference data is $R_1$ when real image x is input to determiner 12 as a discrimination target, weight calculator 13 obtains first difference $d_1$, which is the difference between the first identification result data and the reference data, by an operation represented by the following formula:

$$d_1 = D_1(x) - R_1$$

It should be noted that since the reference data in this case is a matrix in which the values of all the elements are 1, $R_1 = 1$.

Here, when the magnitude of first difference $d_1$, that is, the threshold value indicating the boundary of whether the absolute value is acceptable (hereinafter referred to as the error tolerance value) is T, weight calculator 13 calculates following function $t(d_1)$ indicating the first weight corresponding to first difference $d_1$.

When $d_1 < -T: t(d_1) = 0$

[Math. 1]

$$\text{When } -T \leq d_1 \leq T: t(d_1) = \{1 - (d_1 / T)^2\}^2$$

When $T < d_1: t(d_1) = 0$

FIG. 3 schematically represents a graph of function $t(d_1)$ showing the first weight. As can be seen from FIG. 3, the first weight is set so as to decrease from 1 and approach 0 as the absolute value of first difference $d_1$ increases from 0, and become zero in the range where the absolute value of first difference $d_1$ exceeds error tolerance value T.

Similarly, when each element of the second discrimination result data output by determiner 12 is $D_2(G(z))$ and each element of the reference data is $R_2$ when fake image $G(z)$ output by first converter 11A, which is a generator that has received the input of real image z, is input to determiner 12 as a discrimination target, weight calculator 13 obtains second difference $d_2$, which is the difference between the second identification result data and the reference data, by an operation represented by the following formula:

$$d_2 = D_2(G(z)) - R_2$$

It should be noted that since the reference data in this case is a matrix in which the values of all the elements are 0, $R_2 = 0$.

In addition, when the error tolerance value of the absolute value of second difference $d_2$ is T, following function $t(d_2)$ indicating the second weight corresponding to second difference $d_2$ is also calculated in the same manner as function $t(d_1)$.

When $d_2 < -T: t(d_2) = 0$

[Math 2]

$$\text{When } -T \leq d_2 \leq T: t(d_2) = \{1 - (d_2 / T)^2\}^2$$

When $T < d_2: t(d_2) = 0$

The graph of function $t(d_2)$ showing the second weight is also schematically represented as shown in FIG. 3. That is, the second weight is set so as to decrease from 1 and approach 0 as the absolute value of second difference $d_2$ increases from 0, and become zero in the range where the absolute value of second difference $d_2$ exceeds error tolerance value T.

Weight calculator 13 further calculates the squared error of the discrimination result of determiner 12. Specifically, first squared error $(D_1(x) - 1)^2$ is calculated based on first difference $D_1(x) - 1$ obtained above for each element of the matrix which is the discrimination result data, and the second squared error $(D_2(G(z)) - 0)^2$ is calculated based on second difference $D_2(G(z)) - 0$.

Next, first error calculator 14 calculates the error of determiner 12 based on the first weight, the first squared error, the second weight, and the second squared error calculated as described above. Specifically, each element of the first squared error is multiplied by first weight $(t(d_1))$ corresponding to the value of $d_1$. This result is also referred to as real image error below. In addition, each element of the second squared error is multiplied by second weight $(t(d_2))$ corresponding to the value of $d_2$. This result is also referred to as fake image error below. Then, the result of adding the real image error and the fake image error is obtained as the error of determiner 12. The error of determiner 12 is used by trainer 15 for the training of determiner 12.

The meaning of applying the weight set as described above to the squared error is as follows. The magnitude (absolute value) of the first difference or the second difference indicates the magnitude of the deviation from the correct answer of the determination for each part (small area in the above image example) of the data to be discriminated. Then, each weight set as described above is smaller as the deviation from the correct answer of the determination is larger. When such a weight is applied to the squared error used for the training of the discriminator, for each part of the data input to determiner 12 for the training, the larger the deviation from the correct answer of the determination, the smaller the addition to the error in this training. In other words, the larger the deviation from the correct answer of the determination, the less the influence on the training. Here, the portion including the outliers of the data input to determiner 12 for the training can be determined to deviate more from the correct answer. Therefore, it is possible to suppress the influence of outliers contained in the data to be discriminated on the training of the discriminator. In addition, the greater the degree of deviation of outliers, the stronger the suppression. In the above example, the weight is set to zero for the portion where the deviation from the correct answer of the determination exceeds a threshold value, so that the influence rate on the training of the discriminator becomes zero.

It should be noted that Tukey's biweight estimation method was used to suppress the influence of outliers in the above example, but the method of suppressing the influence of outliers is not limited thereto. Other M estimation methods, which are robust estimation methods capable of setting the squared error as described above, may be used.

[3. Operation of information processing system]

The operation of the information processing method for the training of determiner 12, which is the discriminator, executed in information processing system 10A will be described with reference to a procedure example thereof. FIG. 4 is a flow chart showing a procedure example of the operation of information processing system 10A in which this information processing method is executed.

(Step S10) Determiner 12, which is a discriminator, receives an input of an image obtained by information processing system 10A from a set of real images.

(Step S11) Determiner 12 performs a discrimination process for determining whether the image is a real image or a fake image for each small area of the input image, and calculates and outputs a matrix based on the result. Here, assuming that the image to be discriminated is a real image, the calculated matrix is referred to as a first output matrix for convenience.

(Step S12) Weight calculator 13 calculates the first weight, which is the weight of each element, using the first output matrix calculated in step S11. For the method of calculating the first weight, refer to the example given in "2. Suppression of the influence of outliers" mentioned above.

(Step S13) Weight calculator 13 calculates the first squared error, which is the squared error of each element of the first output matrix calculated in step S11. For the calculation method of the first squared error, refer to "2. Suppression of the influence of outliers" mentioned above.

(Step S20) Determiner 12 receives the input of the fake image generated by first converter 11A, which is a generator, converting the real image.

(Step S21) Determiner 12 performs a discrimination process for determining whether the image is a real image or a fake image for each small area of the input image, and calculates and outputs a matrix based on the result. Here, assuming that the image to be discriminated is a fake image, the calculated matrix is referred to as a second output matrix for convenience.

(Step S22) Weight calculator 13 calculates the second weight, which is the weight of each element, using the second output matrix calculated in step S21. For the method of calculating the second weight, refer to the example given in "2. Suppression of the influence of outliers" mentioned above.

(Step S23) Weight calculator 13 calculates the second squared error, which is the squared error of each element of the second output matrix calculated in step S21. For the calculation method of the second squared error, refer to "2. Suppression of the influence of outliers" mentioned above.

(Step S30) First error calculator 14 calculates the real image error by multiplying the first weight calculated in step S12 by the first squared error calculated in step S13.

(Step S31) First error calculator 14 calculates the fake image error by multiplying the second weight calculated in step S22 by the second squared error calculated in step S23.

(Step S32) First error calculator 14 calculates the error of determiner 12 by adding the real image error calculated in step S30 and the fake image error calculated in step S31.

(Step S33) Trainer 15 implements training of determiner 12, which is a discriminator, using the error calculated in step S32.

It should be noted that the content of the information processing method performed by information processing system 10A is not limited to the above. For example, training of first converter 11A, which is a generator, is also performed by trainer 15. This training is performed using, for example, the above-mentioned error calculated by second error calculator 17. In addition, the first weight, the first squared error data, the second weight, and the second squared error data may be used for the training of first converter 11A.

[4. Supplementary notes]

The information processing method and information processing system according to one or more aspects of the present disclosure are not limited to the description of the above-described embodiment. Various modifications conceived by those skilled in the art may be included in the embodiment of the present disclosure without departing from the spirit of the present disclosure. Examples of such modifications and other supplementary notes to the description of embodiment are given below.
(1) The information processing system according to the above embodiment has been described by using a system that implements CycleGAN as an example, but the information processing system is not limited thereto. The information processing system according to one aspect of the present disclosure is also applicable to other types of GANs of the Patch GAN system and the LSGAN system, such as Combo GAN.

(2) The information processing system according to the above embodiment has been described by using a system, in which image conversion and discrimination are performed, as an example, but the processing target by the information processing system is not limited to image data. Other examples of processing targets include voice, distance point cloud, pressure, temperature, humidity, sensor data such as odor, and language data.
(3) The information processing system according to the above embodiment has been described with reference to an example in which the discrimination result is in a matrix format, but the present invention is not limited thereto. The information processing system in the present disclosure can be applied to information processing that handles discrimination result data, which is data of a tensor having a rank of one or higher.
(4) A part or all of the functional components included in each of the above-mentioned information processing systems may be configured by one system large scale integration (LSI). A system LSI is an ultra-multifunctional LSI manufactured by integrating a plurality of components on a single chip, and it is specifically a computer system configured by including a microprocessor, a read-only memory (ROM), a random access memory (RAM), and the like. A computer program is stored in the ROM. The system LSI achieves the function of each component by the microprocessor operating according to this computer program.
It should be noted that although it is referred to as a system LSI here, it may be referred to as an IC, an LSI, a super LSI, or an ultra LSI due to the difference in the degree of integration. In addition, the method of making an integrated circuit is not limited to LSI, and may be realized by a dedicated circuit or a general-purpose processor. A field programmable gate array (FPGA) that can be programmed after the LSI is manufactured, or a reconfigurable processor that can reconfigure the connection and settings of circuit cells inside the LSI may be used.
Furthermore, if an integrated circuit technology that replaces an LSI appears due to advances in semiconductor technology or another technology derived therefrom, functional blocks may be integrated using that technology. The application of biotechnology or the like may be one possibility among others.
(5) One aspect of the present disclosure is not limited to each of the above-mentioned information processing systems, but may be an information processing method in which a process by characteristic components included in the information processing system is a step. This information processing method is, for example, the information processing method described with reference to the flow chart in FIG. 4. In addition, one aspect of the present disclosure may be a computer program that causes a computer to execute each characteristic step included in this information processing method. In addition, one aspect of the present disclosure may be a computer-readable, non-temporary recording medium on which such a computer program is recorded.

[Industrial Applicability]

This disclosure can be used for training the discriminator in GAN.

[Reference Signs List]

| | |
|---|---|
| 10A, 10B | Information processing system |
| 11A | First converter |
| 11B | Converter |
| 12 | Determiner |
| 13 | Weight calculator |
| 14 | First error calculator |

15        Trainer

16        Second converter

17        Second error calculator

**Claims**

**1.** An information processing method executed by a computer, the information processing method comprising:

obtaining first data and second data that is simulated data based on the first data;

inputting the first data into a discriminator to obtain first discrimination result data;

calculating a first difference between reference data in a discrimination process for the first data by the discriminator and the first discrimination result data;

calculating a first squared error data and a first weight based on the first difference, the first weight being a weight of the first squared error data;

inputting the second data into the discriminator to obtain second discrimination result data;

calculating a second difference between reference data in a discrimination process for the second data by the discriminator and the second discrimination result data;

calculating a second squared error data and a second weight based on the second difference, the second weight being a weight of the second squared error data; and

training the discriminator based on the first squared error data, the second squared error data, the first weight, and the second weight;

wherein the first discrimination result data and the second discrimination result data are data of a tensor having a rank of one or higher.

**2.** The information processing method according to claim 1, wherein as an absolute value of the first difference is larger, the first weight is made smaller to reduce an influence rate of the first squared error data on the training of the discriminator, and

as an absolute value of the second difference is larger, the second weight is made smaller to reduce an influence rate of the second squared error data on the training of the discriminator.

**3.** The information processing method according to claim 2, wherein when the absolute value of the first difference exceeds a threshold value, the first weight is set to zero, and

when the absolute value of the second difference exceeds a threshold value, the second weight is set to zero.

**4.** The information processing method according to any one of claims 1 to 3,

wherein the second data is generated from the first data and output by a generator, and

the generator is trained based on the first squared error data, the second squared error data, the first weight, and the second weight.

**5.** The information processing method according to any one of claims 1 to 4,

wherein the first data is image data.

**6.** An information processing system, comprising:

an obtainer that obtains first data and second data that is simulated data based on the first data;

a weight calculator that calculates a first difference between first discrimination result data obtained by inputting the first data into a discriminator and reference data in a discrimination process for the first data, calculates a second difference between second discrimination result data obtained by inputting the second data into the discriminator and reference data in a discrimination process for the second data, calculates a first squared error data and a first weight, which is a weight of the first squared error data, based on the first difference, and calculates a second squared error data and a second weight, which is a weight of the second squared error data, based on the second difference;

an error calculator that calculates error data used for training the discriminator based on the first squared error data, the second squared error data, the first weight, and the second weight; and

a trainer that trains the discriminator using the error data,

wherein the first discrimination result data and the second discrimination result data are data of a tensor having a rank of one or higher.

# FIG. 1

```
                    ┌──────────────┐
                    │  Real image  │
                    │     set      │
                    └──────┬───────┘
```

10A

```
┌─ ─ ─ ─ ─ ─ ─ ─ ─ ─ ─ ─ ─ ─ ─ ─ ─ ─ ─ ─ ─ ─ ─ ─┐
                                                  11A
                             ┌──────────────┐
                             │    First     │
                             │  converter   │
                             └──────┬───────┘
       ┌──────────────┐  12
       │  Determiner   │
       └──────┬───────┘
       ┌──────────────┐  13          ┌──────────────┐  16
       │    Weight     │              │    Second     │
       │  calculator   │              │  converter    │
       └──────┬───────┘              └──────┬───────┘
       ┌──────────────┐  14          ┌──────────────┐  17
       │  First error  │              │ Second error  │
       │  calculator   │              │  calculator   │
       └──────┬───────┘              └──────┬───────┘
       ┌──────────────┐  15
       │    Trainer    │
       └──────────────┘
└─ ─ ─ ─ ─ ─ ─ ─ ─ ─ ─ ─ ─ ─ ─ ─ ─ ─ ─ ─ ─ ─ ─ ─┘
```

# FIG. 2

```
┌──────────────┐
│ Unconverted  │
│  image set   │
└──────┬───────┘
```

10B

```
┌─ ─ ─ ─ ─ ─ ─ ─ ─ ─ ─┐
                   11B
    ┌──────────────┐
    │  Converter   │
    └──────┬───────┘
└─ ─ ─ ─ ─ ┼ ─ ─ ─ ─ ─┘
           │         ┌──────────────┐
           └────────▶│  Converted   │
                     │  image set   │
                     └──────────────┘
```

# FIG. 3

## FIG. 4

```
                    ┌──────────┐
                    │  Start   │
                    └────┬─────┘
                         │                         │                              │
                         ▼  ⌐S10                    ▼  ⌐S20                         ▼  ⌐S30
            ┌──────────────────────┐   ┌──────────────────────┐   ┌──────────────────────────────┐
            │  Input real image to │   │  Input fake image to │   │  First squared error × First │
            │      determiner      │   │      determiner      │   │  weight = Real image error   │
            └──────────┬───────────┘   └──────────┬───────────┘   └──────────────┬───────────────┘
                       │  ⌐S11                     │  ⌐S21                        │  ⌐S31
                       ▼                           ▼                              ▼
            ┌──────────────────────┐   ┌──────────────────────┐   ┌──────────────────────────────┐
            │   Calculate first    │   │   Calculate second   │   │ Second squared error × Second│
            │    output matrix     │   │    output matrix     │   │   weight = Fake image error  │
            └──────────┬───────────┘   └──────────┬───────────┘   └──────────────┬───────────────┘
                       │  ⌐S12                     │  ⌐S22                        │  ⌐S32
                       ▼                           ▼                              ▼
            ┌──────────────────────┐   ┌──────────────────────┐   ┌──────────────────────────────┐
            │ Calculate first weight│  │ Calculate second weight│  │ Real image error + Fake image│
            │ using first output matrix│ │ using second output │   │  error = Error in determiner │
            └──────────┬───────────┘   └──────────┬───────────┘   └──────────────┬───────────────┘
                       │  ⌐S13                     │  ⌐S23                        │  ⌐S33
                       ▼                           ▼                              ▼
            ┌──────────────────────┐   ┌──────────────────────┐   ┌──────────────────────────────┐
            │ Calculate first squared│ │ Calculate second squared│ │        Training of           │
            │ error of first output matrix│ │ error of second output matrix│ │      determiner        │
            └──────────────────────┘   └──────────────────────┘   └──────────────┬───────────────┘
                                                                                  ▼
                                                                            ┌──────────┐
                                                                            │   End    │
                                                                            └──────────┘
```

**INTERNATIONAL SEARCH REPORT**

| International application No. |
|---|
| PCT/JP2019/050480 |

**A. CLASSIFICATION OF SUBJECT MATTER**
Int.Cl. G06N20/00(2019.01)i
FI: G06N20/00
According to International Patent Classification (IPC) or to both national classification and IPC

**B. FIELDS SEARCHED**

Minimum documentation searched (classification system followed by classification symbols)
Int.Cl. G06N3/00-99/00

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | AIDIARY, PyTorch (15) CycleGAN (horse2zebra), 人工知能に関する断創録 [online], 2018.03.24, [retrieved on 27 January 2020], Internet: \<URL:http://aidiary.hatenablog.com/entry/20180324/1521896184\>, 見出し「Model」, 「Loss」, non-official translation (Imagination and creation record about artificial intelligence [online], headlines "Model", "Loss") | 1-6 |
| Y | 藤村友貴ほか, ToF カメラを用いた散乱媒体下での物体領域と奥行きの同時推定, 情報処理学会研究報告, 2018.10.31, vol. 2018-DCC-020, no. 16, pp. 1-8, ISSN 2188-8868, particularly, pp. 4, 5, (FUJIMURA, Yuki et al., IPSJ SIG Technical Reports), non-official translation (Simultaneous estimation of object region and depth in foggy scenes using ToF camera) | 1-6 |
| Y | 堀修, テロップ認識のための映像からの文字部抽出法, 情報処理学会研究報告, 1999.01.22, vol. 99, no. 3, pp. 129-136, ISSN 0919-6072, particularly, pp. 132-134, (HORI, | 1-6 |

☐ Further documents are listed in the continuation of Box C.      ☐ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 27.01.2020 | 04.02.2020 |

| Name and mailing address of the ISA/ <br> Japan Patent Office <br> 3-4-3, Kasumigaseki, Chiyoda-ku, <br> Tokyo 100-8915, Japan | Authorized officer <br><br> Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019004350 A

**Non-patent literature cited in the description**

- **JUN-YAN ZHU ; TAESUNG PARK ; PHILLIP ISOLA ; ALEXEI A. EFROS.** Unpaired Image-to-Image Translation using Cycle-Consistent Adversarial Networks. *IEEE International Conference on Computer Vision (ICCV),* 2017